# EUROPEAN PATENT SPECIFICATION

(11) **EP 4 060 400 B1**
(45) Date of publication and mention of the grant of the patent: **07.10.2026**
(21) Application number: 21216724.1
(22) Date of filing: 21.06.2018
(51) Int. Cl.: G02F 1/1347, G02F 1/1335, H04N 9/31

(54) **DUAL MODULATION PROJECTOR**
PROJEKTOR MIT ZWEIFACHER MODULATION
PROJECTEUR À MODULATION DOUBLE

(30) Priority: 21.06.2017 US 201762523213 P; 14.08.2017 EP 17186142
(43) Date of publication of application: 21.09.2022
(62) Document number(s) of the earlier application(s) in accordance with Art. 76 EPC: 18178932.2 / 3 418 798
(73) Proprietor: Dolby Laboratories Licensing Corporation, San Francisco, CA 94103 (US)
(72) Inventor: PERTIERRA, Juan P., Indianapolis, 46250 (US); RICHARDS, Martin J., Gig Harbor, 98335 (US); LIPPEY, Barret, San Francisco, 94103 (US)
(74) Representative: Dolby International AB Patent Group Europe

(56) References cited:
- EP-A1- 0 005 245
- EP-A1- 2 869 104
- WO-A1-2016/098281
- JP-A- 2007 199 192
- US-A- 5 694 189
- US-A1- 2013 194 644
- US-A1- 2017 085 846
- US-A1- 2017 339 378
- MANSOOR SHAIK-BAHAE: "Fourier Optics 1 Background", 22 November 2012 (2012-11-22), New Mexico optical lab University, XP055533250, Retrieved from the Internet <URL:http://www.phys.unm.edu/msbahae/Optics%20Lab/Fourier%20Optics.pdf> [retrieved on 20181212]

## Description

### CROSS-REFERENCE TO RELATED APPLICATIONS

This application is a European divisional application of European patent application EP 18178932.2 (reference: D17008EP01), filed 21 June 2018.

### BACKGROUND

### Field

This invention relates generally to dual modulation image projectors, and more particularly to dual modulation image projectors for producing images with high contrast.

### Description of the Background Art

Spatial light modulators (SLMs) are known. SLMs are typically sectioned into pixels, with each pixel being driven separately to introduce a spatially varying change in an incident lightfield. Through spatial variation of lightfields, SLMs can be used to generate a pre-defined image from a spatially homogenous lightfield. SLMs include amplitude modulators, which attenuate the amplitude of incident light, and phase modulators, which alter the phase of incident light. Both amplitude modulators and phase modulators have significant drawbacks.

Amplitude modulators utilize liquid crystals, for example, to variably darken areas within the incident lightfield that correspond to individual pixels of the modulator. An image is formed by darkening each pixel in an amount that corresponds to the brightness of a corresponding region of the desired image. Liquid crystals control amplitude by varying phase, which varies polarization due to the birefringent nature of the liquid crystals, and utilizing external polarizers (or polarizers built into the modulator) to convert the polarization change to an amplitude change. Typical amplitude modulators have a relatively low limit for achievable contrast, because, among other things, reflections (i.e., 0^{th} order light) from various refractive interfaces within the devices brighten regions on the resultant image that are intended to be dark.

Phase modulators utilize, for example, liquid crystals to variably introduce a phase change to areas of the incident light that correspond to individual pixels of the modulator. The phase changes introduce interference between light from different pixels, effectively steering the modulated light in a predictable manner. An image is formed by steering light toward brighter areas of the image and away from darker areas of the image. Known phase modulators have a relatively low limit for achievable contrast in images with a total irradiance that is significantly dimmer than the incident lightfield, because unwanted light is not attenuated, as in an amplitude modulator.

Mansoor Shaik-Bahae: "Fourier Optics 1 Background", 22 November 2012, XP055533250, New Mexico Optical Lab University, retrieved from the Internet: http://www.phys.unm.edu/msbahae/Optics%20Lab/Fourier%200ptics.pdf, relates to the principles of spatial filtering based on Fourier Optics.

WO 2016/098281 A1 and US 2017/339378 A1 relate to a projection apparatus including light sources that emit laser light in a plurality of colors; a modulation means that has a phase-modulating modulation device including display areas corresponding to the individual colors in the plurality of colors of the laser light emitted from the light sources and that modulates the received laser light; an unwanted-component removal means that selects the wavelengths of unwanted components and removes the unwanted components from the laser light modulated by the modulation means, the unwanted components being generated as a result of modulating laser light in other colors unwantedly introduced in the display areas individually corresponding to the plurality of colors of the laser light; and a projection means that projects the light from which the unwanted components have been removed by the unwanted-component removal means.

US 2013/194644 A1 relates to a holographic image projector, comprising a laser light source to provide light at a laser wavelength; a first spatial light modulator (SLM) to display a hologram, wherein said first SLM is illuminated by said laser light source; intermediate image optics to provide a first intermediate real image plane at which a real image produced by said hologram displayed on said first SLM is formed; a wavelength-conversion material located at said first intermediate real image plane to convert said laser wavelength to at least a first output wavelength different to said laser wavelength; and second optics to project light from said real image at said output wavelength to provide a displayed image.

US 5 694 189 A relates to a reflection type liquid crystal display having inclined pixel electrodes. A pixel electrode is disposed with an inclination angle to a base member on a front side (namely, an opposite substrate side) of a liquid crystal display panel. The relation between the reflecting surface of the pixel electrode and the main surface of the base member on the front side of the liquid crystal display panel is defined so that the difference between the reflecting angle of light that is entered as incident light and reflected on the surface of the base member and the leaving angle of light emitted as display light via the liquid crystal display panel exceeds the collection angle of the display apparatus. Thus, undesired light on the main surface of the base member of the display surface is separated from light that is displayed. Consequently, an image free of dazzling and deterioration of contrast ratio due to undesired reflected light can be obtained with a high contrast ratio. In a display apparatus containing the reflection type liquid crystal display, an incident surface to a dichroic prism is an inclined surface, not a surface that is perpendicular to the optical axis. Thus, signal light that is reflected on each reflection type liquid crystal display panel and that is displayed can be separated from undesired light that is reflected on the surface of the dichroic prism. Thus, an image with a high quality, and a high contrast ratio can be displayed.

US 2017/085846 A1 relates to a projector design combining a spatial light modulator that affects only the phase of the illumination, and a spatial light modulator that only affects its amplitude. The phase-only modulator curves the wave-front of light and acts as a pre-modulator for a conventional amplitude modulator. Similar and related projector systems are discussed in EP 2 869 104 A1, JP 2007 199192 A and EP 0 005 245 A1.

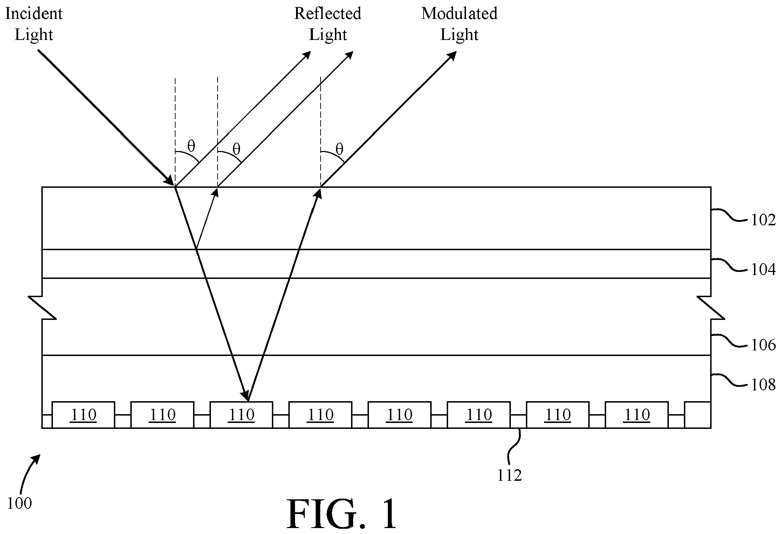

FIG. 1 is a cross-sectional view of an example SLM 100 according to the prior art. SLM 100 includes a cover glass 102, an electrode 104, a liquid crystal layer 106, a dielectric layer 108, and a plurality of pixel mirrors 110 formed on a substrate 112. Light is incident on cover glass 102 at an angle. Most of the incident light is transmitted into cover glass 102, but a portion of the incident light is reflected at an angle *θ* with respect to the normal to cover glass 102, which is equal to the angle of the incident light with respect to the normal to cover glass 102. Another portion of the transmitted light is reflected from the bottom surface of cover glass 102 and is transmitted from cover glass 102 at an identical angle *θ*. The rest of the transmitted light travels through the various layers of SLM 100 (being modulated by liquid crystal layer 106 on the way), reflects off pixel mirrors 110, travels back through the various layers of SLM 100, and is transmitted into the surrounding area at an identical angle *θ*. Because each of the unwanted, reflected portions of light are traveling at the same angle with respect to cover glass 102 as the desired, modulated light, they will follow the same path, thus, decreasing the overall contrast of the resultant image.

### SUMMARY

The present invention is defined by the independent claims. The dependent claims concern optional features of some embodiments of the present invention.

The present disclosure is directed at providing a dual modulation image projector having high contrast. In the present invention, an optical filter located between the two modulators of the image projector is used to filter unwanted light from the generated image, while preserving the DC component of the modulated illumination beam fed into the filter.

### BRIEF DESCRIPTION OF THE DRAWINGS

Aspects of the present disclosure are described in more detail with reference to the following drawings, wherein like reference numbers denote substantially similar elements:
FIG. 1 is a cross-sectional view of an exemplary spatial light modulator (SLM) according to the prior art;
FIG. 2 is a block diagram showing an exemplary projection system, including SLMs;
FIG. 3 is a block diagram illustrating a principle of operation of an SLM suitable for use in the projection system of FIG. 2 according to an example useful for understanding the invention;
FIG. 4 is a cross-sectional view of an SLM employing the operational principle of FIG. 3;
FIG. 5 is a cross-sectional view of an alternate SLM employing the operational principle of FIG. 3;
FIG. 6 is a block diagram illustrating an alternate principle of operation of an SLM suitable for use in the projection system of FIG. 2 according to an example useful for understanding the invention;
FIG. 7 is a cross-sectional view of an SLM employing the operational principle of FIG. 6;
FIG. 8 is a cross-sectional view showing yet another alternate SLM suitable for use in the projection system of FIG. 2 according to an example useful for understanding the invention;
FIG. 9 is a block diagram showing one example of lightfield optics / filters of projection system 200 in greater detail which is according to the present invention;
FIG. 10A is a cross-sectional view showing one example of the lightfield optics/filters of FIG. 9 in greater detail;
FIG. 10B is a cross-sectional view showing potential undesirable filtering of modulated light;
FIG. 10C is a cross-sectional view illustrating the avoidance of undesirable filtering by steering all modulated light (the entire lightfield) by a predetermined angle, according to an embodiment of the invention.
FIG. 11A is a front view showing the optical filter of FIG. 10A in more detail;
FIG. 11B is a front view showing an alternate optical filter;
FIG. 12 is a cross-sectional view showing alternate lightfield optics/filters;
FIG. 13 is a front view showing the optical filter of FIG. 12 in more detail;
FIG. 14 is a flowchart summarizing a method for manufacturing a high contrast SLM according to an example useful for understanding the invention; and
FIG. 15 is a flowchart summarizing some of the basic features of the method for generating a high contrast lightfield.

### DETAILED DESCRIPTION

The present invention provides a dual modulation image projector configured to separate unwanted light from modulated light, in order to increase contrast in displayed images. A filter is configured to block or attenuate unwanted light. In the following description, numerous specific details are set forth (e.g., particular geometries, optical elements, spatial light modulator (SLM) types, etc.) in order to provide a thorough understanding of several aspects of the present disclosure. Those skilled in the art will recognize, however, that said aspects may be made use of apart from these specific details. For instance, examples are shown that include liquid crystal SLMs. However, aspects of the disclosure can be employed using other types of SLMs including, but not limited to, digital mirror devices (DMDs), microelectromechanical systems (MEMS) devices, and any other SLM that might possibly generate unwanted reflections that reduce image quality. In other instances, details of well-known projection practices (e.g., spatial light modulation, image data processing, manufacturing, routine optimization, etc.) and components have been omitted, so as not to unnecessarily obscure the present disclosure.

In the description of examples certain SLMs are referred to as "phase modulating" and other SLMs are referred to as "amplitude modulating" to distinguish between an SLM that is used to steer light to create a lightfield on a primary modulator and an SLM that modulates selected portions of the lightfield to create an image for viewing. However, these terms are not used in a limiting sense. For example, DMDs selectively steer light along or out of an optical path, but are used as amplitude modulators by time multiplexing the amount of light steered into or out of an image to create an intermediate gray level (perceived amplitude modulation). As another example, liquid crystal SLMs selectively alter the phase of light and can, therefore, be considered a phase modulating or beam steering device. However, the birefringent property of liquid crystals also results in polarization rotation, and so liquid crystal SLMs can be used with internal or external polarizers to provide amplitude modulation. Therefore, devices referred to as "amplitude modulating", "phase modulating", or "beam steering" are understood to include any device capable of performing the titled function, either alone or in combination with other devices.

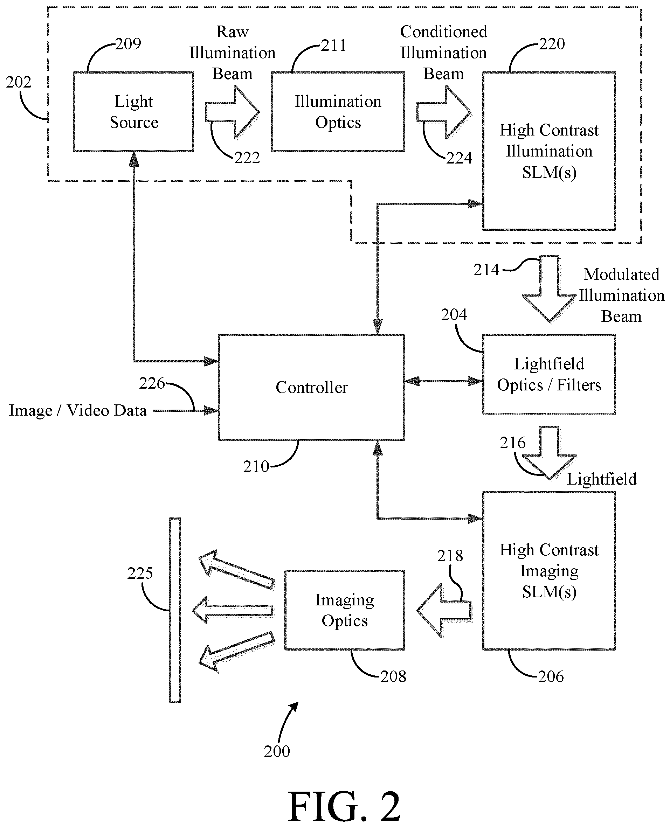

FIG. 2 is a block diagram of an image projector 200 capable of producing high contrast images. Image projector 200 includes an illumination source 202, lightfield optics/filters 204, high contrast imaging SLM(s) 206, imaging optics 208, and a controller 210.

According to the invention, projector 200 is a dual modulation projector. Dual modulation increases the dynamic range of projector 200 by reducing light leakage at imaging SLM(s) 206. For example, the pixels of imaging SLM(s) 206 that are displaying darker areas of an image are illuminated with less intense light, thereby decreasing the amount of required attenuation by imaging SLM(s) 206. As a result, the light output of dark pixels is closer to 0%, which improves the dynamic range of projector 200.

Illumination source 202 includes a plurality of individually controllable light valves, which facilitate the emission of a modulated illumination beam 214. In this example , illumination source 202 includes a light source 209, illumination optics 211, and high contrast illumination SLM(s) 220. Light source 209 generates a raw illumination beam 222, and directs raw illumination beam 222 toward illumination optics 211. Illumination optics 211 conditions raw illumination beam 222 to generate a conditioned illumination beam 224 and directs conditioned illumination beam 224 to evenly impinge on illumination SLM(s) 220. Illumination SLM(s) 220 modulate conditioned illumination beam 224 to produce modulated illumination beam 214 responsive to illumination data provided by controller 210. In this example , the individually controllable light valves of illumination source 202 are pixels (or groups of pixels) of illumination SLM(s) 220, which is/are reflective liquid crystal phase modulators capable of steering light beams at desired angles.

Lightfield optics/filters 204 receives modulated imaging beam 214 and alters/redirects modulated imaging beam 214 in a predetermined way, in order to illuminate high contrast imaging SLM(s) 206 with a desired lightfield 216. Although shown as a beam transmitted from lightfield optics/filters 204 to imaging SLM(s) 206 for illustrative purposes, lightfield 216 is more accurately described as the light impinging on the modulating surface(s) of imaging SLM(s) 206.

Imaging SLM(s) 206, responsive to image data from controller 210, modulate(s) lightfield 216 to infuse an imaging beam 218 with an image corresponding to the image data, and directs imaging beam 218 to imaging optics 208. Imaging optics 208 focuses imaging beam 218 on a viewing surface 225, where the projected images can be viewed (e.g., on a movie theater screen).

Controller 210 receives image/video data from a source (not shown) via data input 226, adjusts the image data depending on lightfield 216, which is simulated by controller 210, and provides the adjusted image data to imaging SLM(s) 206.

In the example , illumination SLM(s) 220 and imaging SLM(s) 206 are high contrast spatial light modulators. SLM(s) 220 and 206 increase contrast by redirecting unwanted light that reflects from optical interfaces of SLM(s) 220 and 206 (i.e. 0^{th} order light) away from the desired, modulated light (i.e. 1^{st} order light). The present disclosure presents various particular examples of SLM(s) 220 and 206 that generate high contrast images as illustrative examples, but it should be understood that the illustrative examples disclosed are not limiting. For example, SLM(s) 220 and 206 are shown in the following examples as liquid crystal SLMs. However, SLM(s) 220 and 206 can be any SLMs having a cover glass or other front reflective surface, including, but not limited to, digital micro-mirror devices, multi-element mirror devices, microelectromechanical devices, and/or any other spatial light modulators, including those yet to be invented.

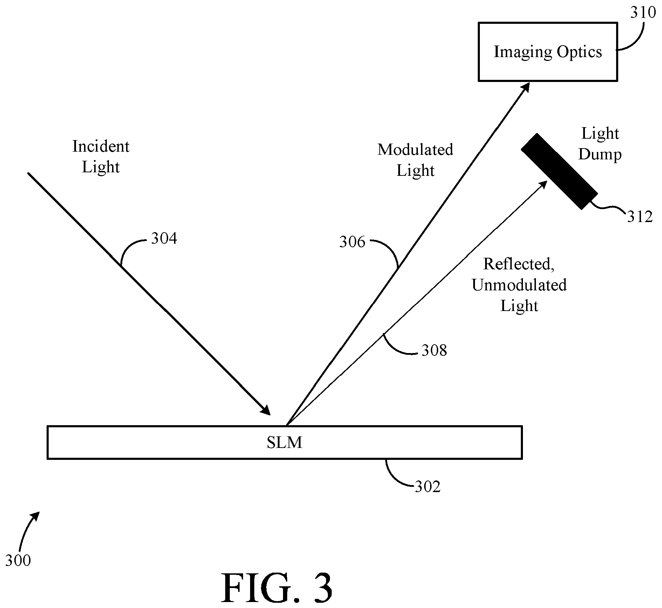

FIG. 3 is a block diagram illustrating a principle of operation of an SLM 302 suitable for use in projection system 200 as, for example, SLM(s) 206 and/or 220 according to an example useful for understanding the invention. Incident light 304 (e.g., conditioned illumination beam 224 or lightfield 216) impinges on SLM 302. SLM 302 modulates a portion of the incident light, but another portion of the light reflects from various refraction interfaces on/within SLM 206 and remains unmodulated. SLM 302 is configured to create an angular diversity between the modulated light 306 and the reflected, unmodulated light 308, such that modulated light 306 is directed toward imaging optics 310, and reflected, unmodulated light 308 is directed toward and absorbed by a light dump 312. SLM 302 is capable of producing images with relatively high contrast because the unwanted, reflected light that normally pollutes displayed images is instead eliminated.

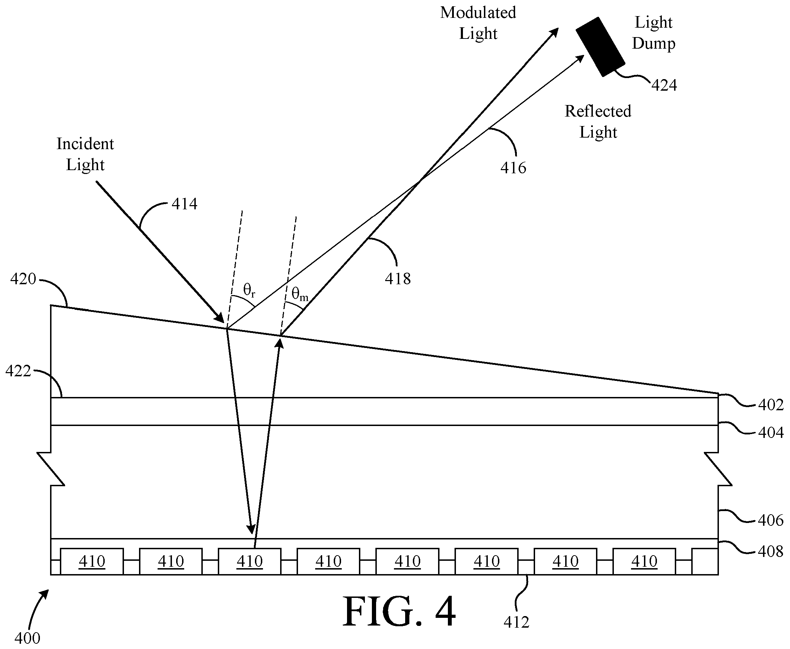

FIG. 4 is a cross-sectional view of an SLM 400 employing the operational principle of angular diversity illustrated in FIG. 3. SLM 40 includes a cover glass 402, a transparent electrode 404, a liquid crystal layer 406, a dielectric layer 408, and a plurality of pixel mirrors 410 formed on a substrate 412. SLM 400 spatially modulates incident light 414 by introducing a spatially varying voltage across liquid crystal layer 406. Electrode 404 is held at a reference voltage and each of pixel mirrors 410 has an operational voltage asserted thereon. The operational voltages asserted on pixel mirrors 410 generate a spatially varying electric field across liquid crystal layer 406. This electric field causes optically relevant properties of the liquid crystals to vary spatially. This spatial variation introduces a spatially varying polarization and/or phase adjustment into the light that travels through liquid crystal layer 406. The spatially modulated light is eventually utilized to generate images.

Cover glass 402 has a particular geometry configured to introduce angular diversity between the modulated light 418 and reflected, unmodulated light 416. Cover glass 402 has an angled top surface 420 with respect to its bottom surface 422. The magnitude of the angle is greatly exaggerated in FIG. 4 for illustrative purposes. Incident light 414 is mostly transmitted through cover glass 402 and into SLM 400, but about four percent (4%) of the light is reflected at an angle θᵣ equal to the angle of incidence of light 414 on top surface 420. Due to the nonparallel orientation of top surface 420, the transmitted light is incident on pixel mirrors 410 at a slightly smaller angle of incidence, as compared to the case where top surface 420 is parallel to the top surfaces of pixel mirrors 410. The resulting slightly smaller angle of reflection from pixel mirrors 410, in combination with refraction by angled top surface 420, causes the transmitted, modulated light 418 to be refracted, upon exiting cover glass 402, at an angle θₘ that is not equal to the angle θᵣ of the unmodulated reflected light 416. Therefore, the modulated light can be directed toward imaging optics 208 (FIG. 2) and the reflected light can be directed toward a light dump 424, because they do not travel in the same direction. The removal of unmodulated light 416 from modulated light 418 results in an eventual image with higher contrast.

In the example, only top surface 420 is oriented not parallel with respect to pixel mirrors 410. In alternate examples, any additional surfaces, layers, and/or interfaces of SLM 400 can be oriented not parallel with respect to pixel mirrors 410. Additionally, the angle of surfaces, layers, and/or interfaces of SLM 400 can be made progressively steeper (or shallower) as a function of height in SLM 400. For example, if top surface 420 is angled 5 degrees with respect to pixel mirrors 410, then bottom surface 422 can be angled 4 degrees with respect to pixel mirrors 410, a bottom surface of electrode 404 can be angled 3 degrees with respect to pixel mirrors 410, and so on. In addition, cover glass 402 can be designed with a variety of alternate geometries, including, but not limited to, spherical/aspherical, convex/concave, randomized, and grating surfaces and periodic arrays, in order to introduce angular diversity between modulated light 418 and unmodulated light 416. Changes in the geometry of the cover glass that eliminate unmodulated light 416 can introduce complex changes in the resulting lightfield at, for example, a primary modulator. The complex changes in the lightfield can be accommodated by complementary changes in the structure of the primary modulator and/or image data driving the primary modulator.

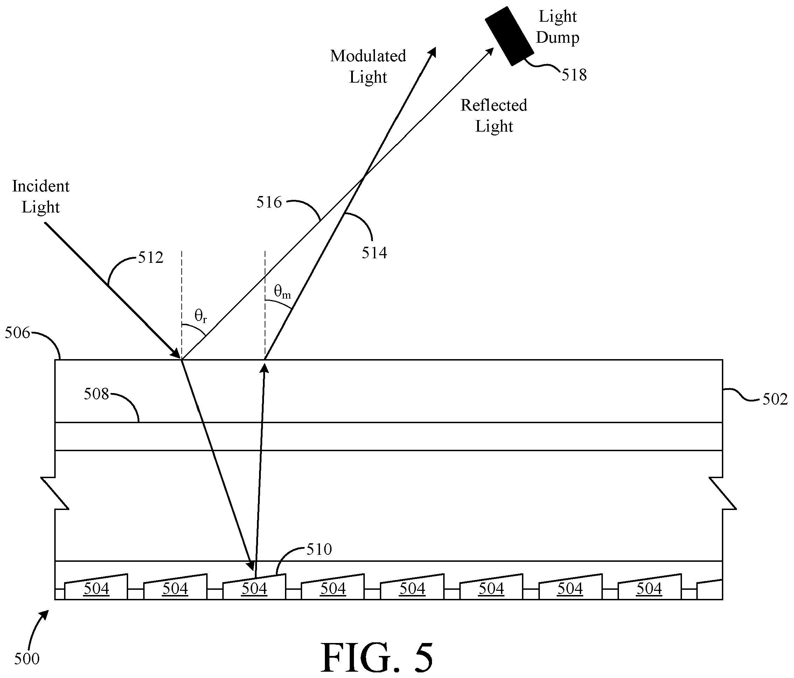

FIG. 5 is a cross-sectional view of an alternate SLM 500 employing the operational principle of angular diversity illustrated in FIG. 3. SLM 500 is substantially similar to SLM 400 except for a cover glass 502 and pixel mirrors 504. Cover glass 502 has a top surface 506 that is substantially parallel to its bottom surface 508, and to most other structures/layers of SLM 500, except for pixel mirrors 504. Instead, the top surface 510 of each pixel mirror 504 forms a nonzero angle with respect to surfaces 506 and 508 of cover glass 502. When incident light 512 is transmitted through top surface 506 of cover glass 502, it is refracted at a particular angle with respect to the normal of top surface 506. Because the top surfaces 510 of pixel mirrors 504 are tilted with respect to top surface 506 of cover glass 502, the modulated light reflected by pixel mirrors 504 has a smaller angle of incidence on the back surface of cover glass 502 and is, therefore, refracted by cover glass 502 at a smaller angle θₘ than the angle of reflection θᵣ of incident light 512. The angular diversity allows modulated light to be directed toward additional system optics (such as imaging optics 208) and reflected light 516 to be directed toward a light dump 518. As a result, an image generated from modulated light 514 will have higher contrast. Additionally, pixel mirrors 510 favor angled illumination, and, therefore, this particular example reflects light more efficiently.

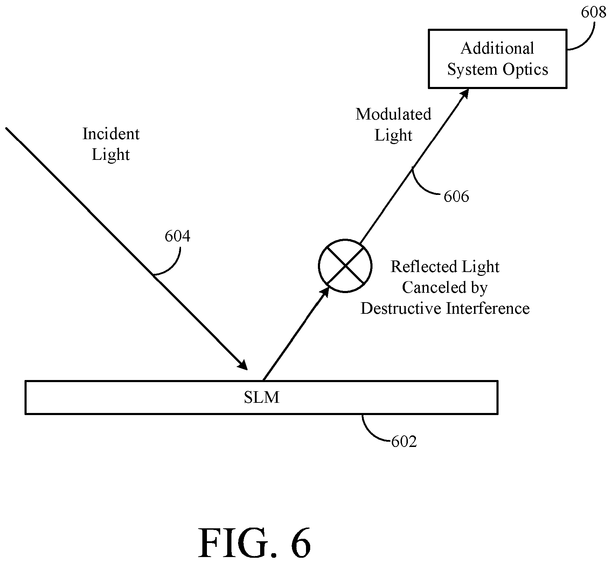

FIG. 6 is a block diagram illustrating an alternate principle of operation of an example SLM 602 suitable for use in projection system 200 according to an example useful for understanding the invention. SLM 602 utilizes destructive interference to eliminate/reduce reflected light, in order to increase contrast in a resultant image. SLM 602 modulates a portion of incident light 604 to form modulated light 606, and directs modulated light 606 toward additional system optics 608 (e.g., lightfield optics/filter 204). Another portion of the incident light reflects from upper layers of SLM 602 and, therefore, escapes modulation. However, the thicknesses of the upper layers can be selected to eliminate the reflected light through destructive interference. In particular, the thickness of one or more upper layers (e.g., a cover glass) is specifically calibrated to induce a phase difference of pi (i.e. one-half wavelength) between the light reflected from a bottom surface of the layer and a top surface of the layer. The phase change causes the light reflected from the bottom surface of the layer to destructively interfere with the light reflected from the top surface of the layer. The destructive interference significantly reduces the intensity of the reflected, unmodulated light.

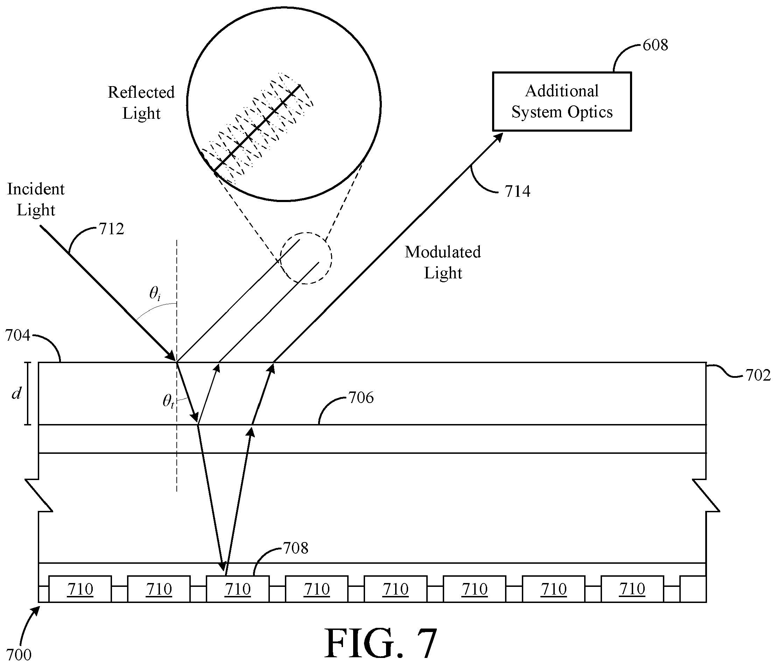

FIG. 7 is a cross-sectional view of an SLM 700 employing the operational principle of destructive interference illustrated in FIG. 6. SLM 700 is substantially similar to SLM 400, except that cover glass 702 has a top surface 702 and a bottom surface 704 that are both parallel to the top surfaces 708 of pixel mirrors 710. In addition, cover glass 702 has a particular thickness (d), which induces a half-wavelength phase difference between light reflected from top surface 704 and light reflected from bottom surface 706 at top surface 704 of cover glass 702. The required thickness of cover glass 702 can be calculated for a variety of wavelengths of light from the angle of incidence, *θᵢ*, of light 712 impinging onto top surface 704 of cover glass 702, as follows.

The phase change, *δ*, of the transmitted light is given by the following: $δ = \frac{2 π}{{λ}_{0}} {n}_{2} {x}_{2}$ where *λ*₀ is equal to the wavelength of the transmitted light if it were traveling through a vacuum, *n*₂ is the refractive index of cover glass 702, and *x*₂ is the total distance traveled by the transmitted light within cover glass 702.

The total distance travelled is calculated by forming a triangle consisting of the thickness, *d,* of cover glass 702 as the leg adjacent to the angle of refraction, *θₜ,* of the transmitted light and half of the total distance $\frac{{x}_{2}}{2}$ traveled by the transmitted light as the hypotenuse (because a portion of the transmitted beam reflects from bottom surface 706). Then, ${x}_{2} = \frac{2 d}{{cosθ}_{t}}$

From Snell's law, the angle of refraction, *θₜ*, of the transmitted light can be calculated from the index of refraction of the surrounding material and of cover glass 702 (*n*₁ and *n*₂, respectively) and the angle of incidence *θᵢ*, as shown: ${n}_{1} sin {θ}_{i} = {n}_{2} sin {θ}_{t} \to {θ}_{t} = {sin}^{- 1} \left(\frac{{n}_{1}}{{n}_{2}}sin {θ}_{i}\right)$

Setting *δ* equal to π and inserting the equation for *x*₂ above, gives: $d = \frac{{λ}_{0}}{4 {n}_{2}} {cosθ}_{t}$ and, finally, $d = \frac{{λ}_{0}}{4 {n}_{2}} cos \left[{sin}^{- 1}\left(\frac{{n}_{1}}{{n}_{2}}sin {θ}_{i}\right)\right]$

Cover glass 702 is designed for use with a particular wavelength (or range of wavelengths) of light. With thickness d, as calculated above, cover glass 702 will induce a half wavelength phase-shift on light that reflects from bottom surface 706 and has a wavelength of *λ*₀ in a vacuum. Light that reflects from bottom surface 706 is completely out of phase with the light that reflects from top surface 704, and so destructive interference significantly reduces the amount of reflected, unmodulated light in modulated light 714. Therefore, images generated by additional system optics 608 will have higher contrast. It should be noted that, because cosine is a periodic function, there will be an infinite number of solutions that satisfy the above equation for thickness of the cover glass with a given angle of incidence *θᵢ*. Using a cover glass 702 with a thickness that results in a path length of the incident light within cover glass 702 (from top surface 704, to back surface 706, and back to top surface 704) that is less than the coherence length of the incident light contributes to effective destructive interference.

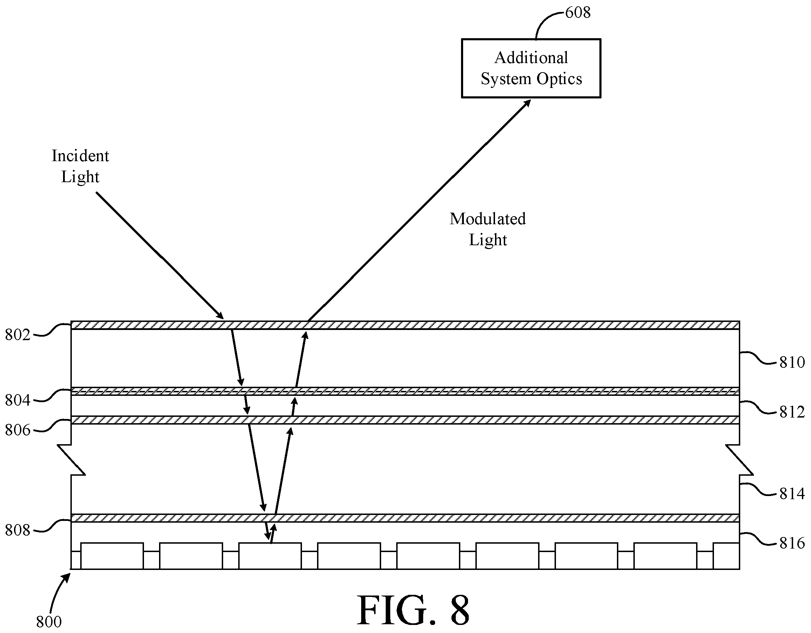

FIG. 8 is a cross-sectional view showing yet another alternate SLM suitable for use in projection system 200 according to an example useful for understanding the invention. SLM 800 is substantially similar to SLM 700 except that the cover glass 802 of SLM 800 is not necessarily designed to provide destructive interference. Instead, SLM 800 includes a first antireflective coating 802, a second antireflective coating 804, a third antireflective coating 806, and/or a fourth antireflective coating 808. First antireflective coating 802 is disposed above a transparent cover glass 810, and reduces reflections of the incident light from cover glass 810. Second antireflective coating 804 is disposed between cover glass 810 and an electrode 812. Antireflective coating 804 reduces reflections that would otherwise occur at the interface between cover glass 810 and electrode 812. Third antireflective coating 806 is disposed between electrode 812 and a liquid crystal layer 814. Antireflective coating 806 reduces reflections that would otherwise occur at the interface between electrode 812 and liquid crystal layer 814. Fourth antireflective coating 808 is disposed between liquid crystal layer 814 and a dielectric layer 816. Antireflective coating 808 reduces reflections that would otherwise occur at the interface between liquid crystal layer 814 and dielectric layer 816.

Antireflective coatings 802, 804, 806, and 808 are graded-index antireflective coatings. It is advantageous to match the index of refraction of the bottom layer of antireflective coating 806 and of the top layer of antireflective coating 808 to the index of refraction exhibited by liquid crystal layer 814 when it is in its black-state. In alternate examples, antireflective coatings 802, 804, 806, and 808 can also be multilayer thin-film optical coatings, single-layer interference coatings, or any other antireflective coatings, including those now known or yet to be developed. Additionally, any of antireflective layers 802, 804, 806, and/or 808 can be utilized individually or in any combination of antireflective layers 802, 804, 806, and/or 808, depending on the particular application.

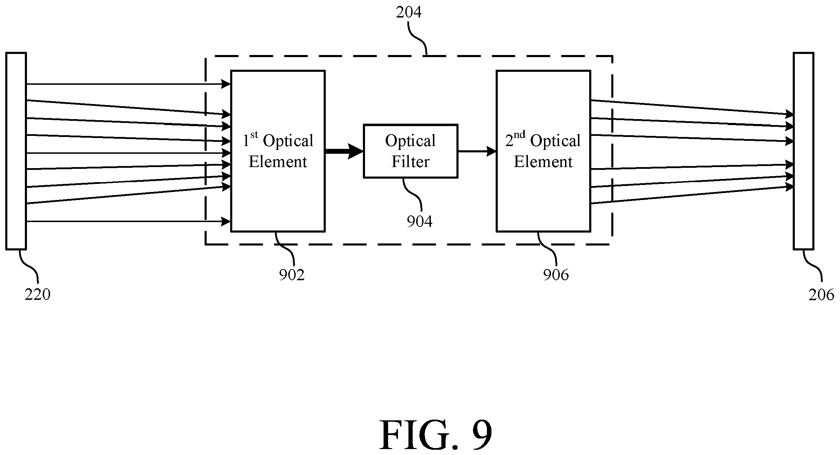

FIG. 9 is a block diagram showing one example of lightfield optics / filters 204 of projection system 200 according to the present invention in greater detail. Illumination SLM(s) 220 provide(s) a spatially modulated lightfield to SLM(s) 206, through lightfield optics/filters 204. SLM(s) 220 is/are (a) reflective phase modulator(s) that effectively steer(s) selected portions of the incident light to generate a spatially variant lightfield. The steered light traverses lightfield optics/filters 204, which include a first optical element 902, an optical filter 904, and a second optical element 906. First optical element 902 is, in the example , a Fourier lens, which produces a Fourier transform of the steered light in the Fourier plane. Optical filter 904 is located at or near the Fourier plane of first optical element 902. Optical filter 904 selectively filters portions of the Fourier transform corresponding to reflected, unmodulated light from SLM(s) 220, and second optical element 906 focuses the filtered lightfield on SLM(s) 206. SLM(s) 206 is/are (an) amplitude modulating SLM(s), which generate(s) images by spatially modulating the lightfield produced by SLM(s) 220. Filtering the reflected, unmodulated light from the lightfield generated by SLM(s) 220 results in higher contrast images being generated by SLM(s) 206.

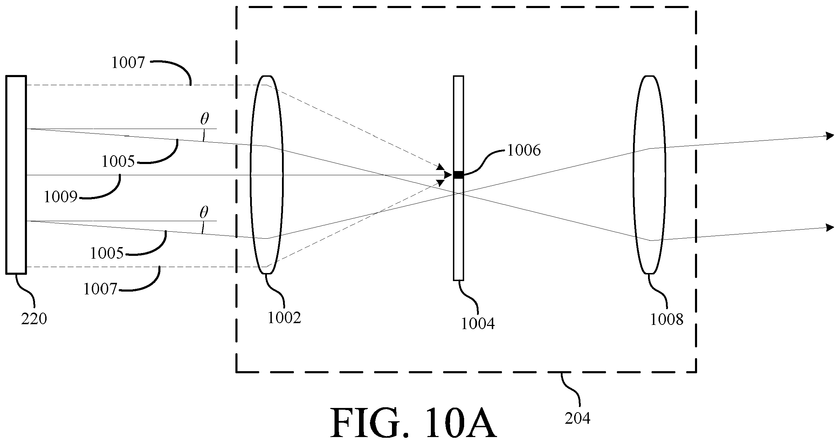

FIG. 10A is a cross-sectional view showing lightfield optics/filters 204 in more detail. Light incident on SLM(s) 220 is steered toward first optical element 902, which, in this example, is a convex lens 1002. Lens 1002 focuses a Fourier transform of the steered light onto an optical filter 1004 by directing rays to corresponding points of the filter, based on the angle of those rays with respect to the normal of SLM(s) 220. For example, the two rays 1005 having angles equal to *θ* with respect to the normal of SLM(s) 220 are redirected to an off-center point on optical filter 1004. The other rays (two unmodulated, reflected rays 1007 and one intentionally un-steered ray 1009), all of which have an angle of 0° with respect to the normal, are redirected to the center of optical filter 1004. The light that is redirected to the center of optical filter 1004 includes the "DC term" of the modulated lightfield and the unmodulated, reflected light. Optical filter 1004 is a transparent optical element having an opaque, light block disc 1006 positioned in the center, which blocks the "DC term" of the modulated lightfield and the unmodulated, reflected light. Thus, a user can eliminate unwanted light from the system by leaving it un-steered. Light that is not blocked continues onto second optical element 906, which, in this example, is a convex lens 1008. Lens 1008 focuses the, now diverging, light from lens 1002 back to its initial trajectory toward SLM(s) 206 (FIG. 9).

In the example, optical filter 1004 is placed at the Fourier plane of lightfield optics/filters 204 to allow precise spatial filtering of the steered lightfield. In alternate examples, optical filter 1004 can be placed in other locations between lenses 1002 and 1008, in order to filter less of the DC term light. Additionally, optical filter 1004 can be made slidable with respect to lenses 1002 and 1008, in order to filter more or less of the DC term, as needed for each particular application. In addition, light block disc 1006 can be a light block of various shapes and sizes, such as one or more concentric rings.

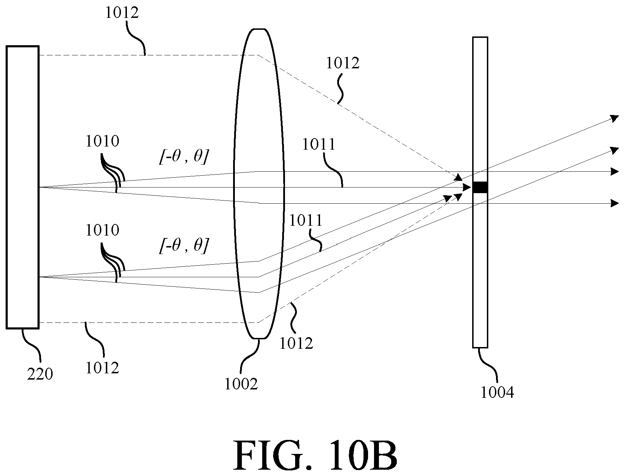

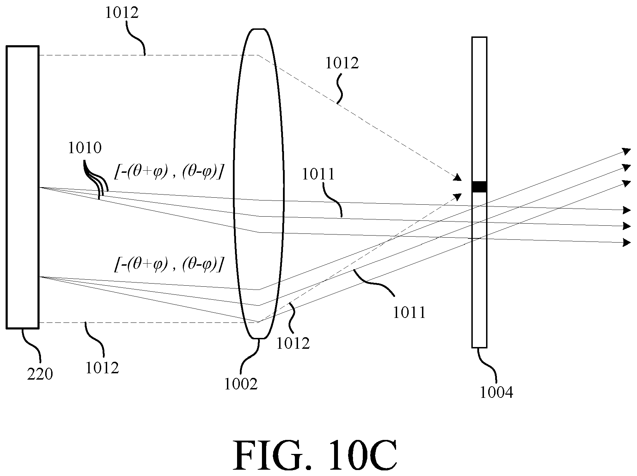

An advantage of the present invention is the ability to preserve the DC term of the desired lightfield, while at the same time filtering out the reflected, unmodulated light (0^{th} order light) from the lightfield. An example method for preventing the desired DC term light from being blocked by optical filter 1004 includes steering the entire image at a nonzero angle with respect to the normal of SLM 220. To form an image, a steering solution is calculated by determining a steering angle for light from each region of SLM 220 (e.g. one or more pixels). The range of steering angles for the solution is constrained to the interval [-*θ*, *θ*], where *θ* is some fraction of the maximum steering angle that SLM 220 is capable of producing. In most examples, the solution will include some steering angles that are parallel to the normal of SLM 220. However, adjusting the steering angles of the solution to steer the entire lightfield by a predetermined amount can ensure that the adjusted solution will not include any angles that will be filtered out with the reflected, unmodulated (0^{th} order) light. This technique will be described in more detail with reference to FIGs. 10B and 10C.

FIG. 10B is a cross-sectional view illustrating the constrained range of steering angles available to SLM 220 in the initial image solution. Imaging beams 1010 range in angle from - *θ* to *θ*, including a zero angle in between. Because the zero-angle light 1011 is traveling perpendicular with respect to the surface of SLM 220, it is blocked by optical filter 1004, along with reflected beams 1012, which cannot be steered.

FIG. 10C is a cross-sectional view illustrating additional steering of the initial image solution of FIG. 10B. In order to retain the un-steered light 1011 in the image solution, the entire image is steered by an additional angle ±*φ*, where *φ* > *θ* and *φ* + *θ* is smaller than the maximum steering angle that SLM 220 is capable of producing. Imaging beams 1010 are each steered at an additional angle *-φ,* and now range in angle from (*θ - φ*) to -(*θ* + *φ*)*.* Because the entire interval [(*θ - φ*),-(*θ + φ*)] is negative, none of the rays of the steered solution are normal to SLM 220 and, therefore, none of the image (including the DC term) is inadvertently blocked by optical filter 1004. In this way, reflected (0^{th} order) light 1012 can be removed from an image, without affecting the desired image itself.

This technique for preserving the DC term of the lightfield has been described as a two-step process for ease of understanding. In particular, the technique has been described as first calculating a steering angle within the confined range to generate the desired light field, and then steering the entire lightfield by a adjusting the steering angles by a predetermined amount. However, it should be understood that these steps can be consolidated into a single steering angle computation that yields the adjusted steering angles in the first instance. It is not necessary to generate the initial steering angles, and then adjust those steering angles in a separate step.

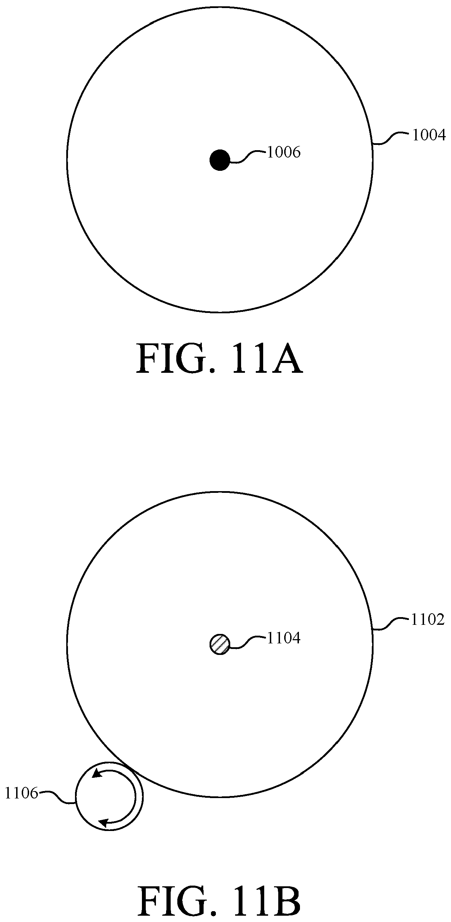

FIG. 11A is a front view showing optical filter 1004 in more detail. Optical filter 1004 is a transparent, circular element with light block disc 1006 centered in the middle. In a particular example, optical filter 1004 is positioned so that light block disc is centered on the optical axis of lens 1002. Light block disc 1006 blocks light corresponding to the DC term of the Fourier transform of the steered lightfield.

FIG. 11B is a front view showing an alternate optical filter 1102. Optical filter 1102 is a transparent circular element with a polarizing disc 1104 centered in the middle. For use in systems with some level of light polarization, optical filter 1102 can provide adjustable attenuation of light corresponding to the DC term of the Fourier transform of the steered lightfield. Optical filter 1102 is rotationally coupled to a rotary actuator 1106, which selectively rotates in either direction. Actuator 1106 rotates optical filter 1102 between 0° and 90° in order to alter the polarization orientation of polarizing disc 1104, with respect to the incident lightfield. Thus, the amount of light corresponding to the DC term that passes through optical filter 1102 can be attenuated by driving actuator 1106.

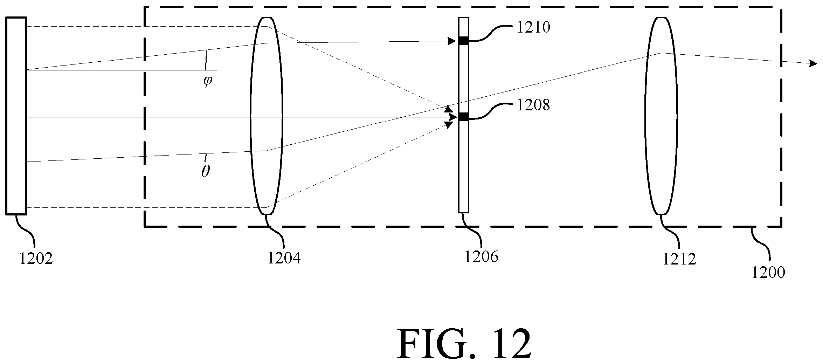

FIG. 12 is a cross-sectional view showing an alternate lightfield optics/filters 1200. Lightfield optics/filters 1200 are substantially similar to lightfield optics/filters 204 of FIG. 10A, except that filter 1206 is configured to additionally block light that is steered in a particular, predetermined direction. An example SLM 1202 (e.g. SLM(s) 220) steers incident light to produce a desired lightfield. A first convex lens 1204, which is substantially similar to lens 1002, focuses the steered light toward an optical filter 1206 located at or near the Fourier plane. Filter 1206 is positioned with light blocking disc 1208 at or near the optical axis of lens 1204. Optical filter 1206 is similar to optical filter 1004, except that optical filter 1206 includes a centered light blocking disc 1208 in combination with an additional light blocking disc 1210 that is spaced apart from light blocking disc 1208 at a predetermined position. Light blocking disc 1208 functions in the same manner as light blocking disc 1006. Light blocking disc 1210 is positioned to block light steered at a particular angle, such as, for example, light with an angle of *φ* with respect to the normal of SLM 1202, as shown in FIG. 12. As a result, unwanted light can be steered at angle *φ* in order to remove the light from the lightfield, using light blocking disc 1210 as a light dump. A second convex lens 1212 then focuses the, now diverging, light from lens 1204 back to its initial trajectory toward additional system optics (not shown).

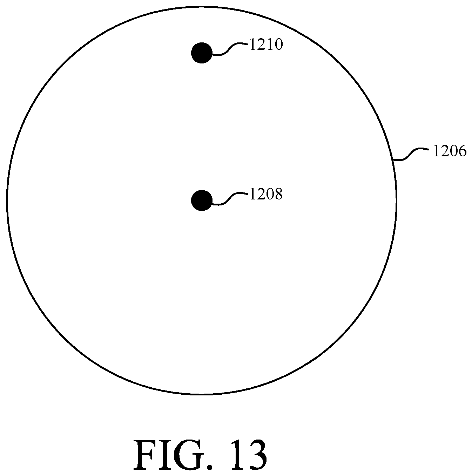

FIG. 13 is a front view showing optical filter 1206 in more detail. Optical filter 1206 is a transparent, circular element with light blocking disc 1208 located in the center and light block disc 1210 located in predetermined position near peripheral portion of filter 1206. Light blocking disc 1208 blocks the reflected, unmodulated (0^{th} order) light, and light blocking disc 1210 blocks light steered at the predetermined angle *φ*.

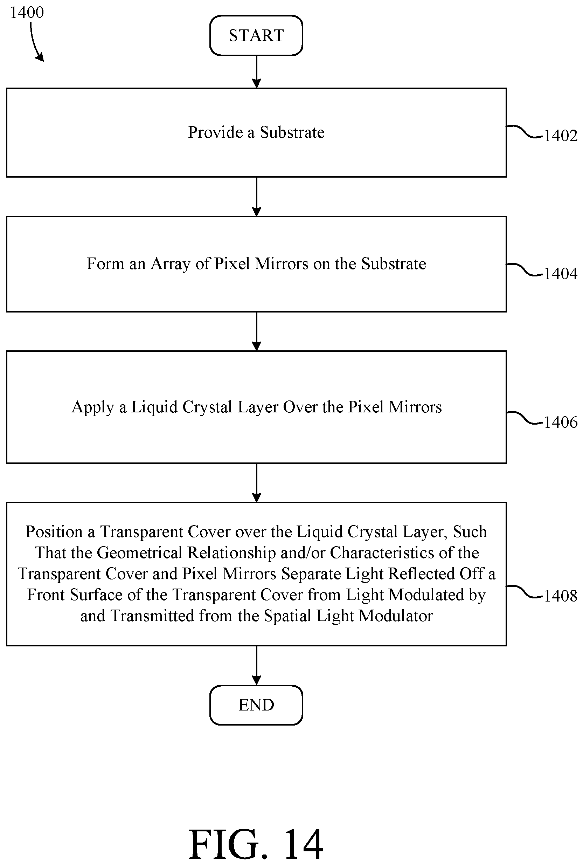

FIG. 14 is a flow chart summarizing a method 1400 for manufacturing an SLM according to an example useful for understanding the invention. First, in a first step 1402, a substrate is provided. Then, in a second step 1404, an array of pixel mirrors is formed on the substrate. Next, in a third step 1406, a liquid crystal layer is applied over the pixel mirrors. Finally, in a fourth step 1408, a transparent cover is positioned over the liquid crystal layer, such that the geometrical relationship and/or characteristics of the transparent cover and the pixel mirrors separate light reflected off a front surface of the transparent cover from light modulated by and transmitted from the SLM.

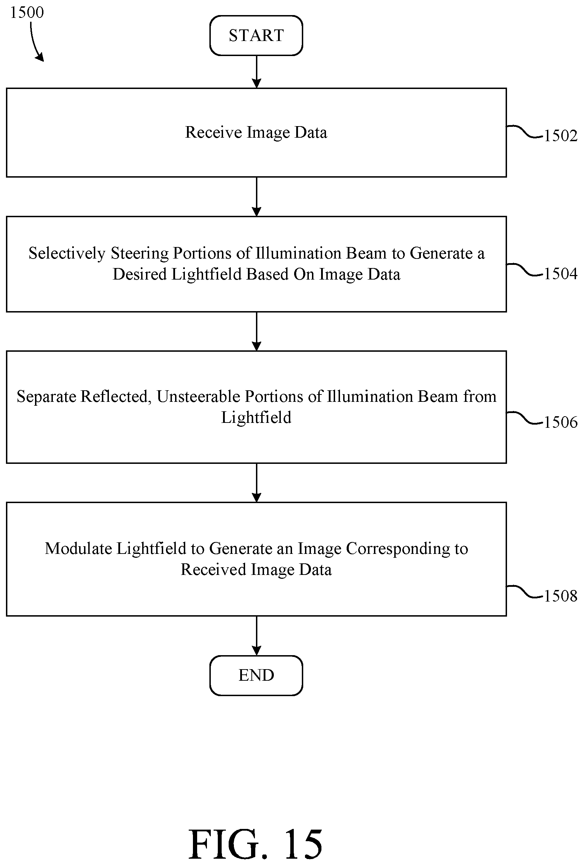

FIG. 15 is a flowchart summarizing some of the basic features of the inventive method 1500 of generating a high contrast lightfield. In a first step 1502, image data is received. Then, in a second step 1504, portions of an illumination beam are selectively steered to generate a lightfield based at least in part on the image data. Next, in a third step 1506, reflected, unsteerable portions of the illumination beam are separated from the lightfield. Then, in a fourth step 1508, the lightfield is modulated to generate an image corresponding to the received image data.

The description of particular examples of the present disclosure is now complete. Many of the described features may be substituted, altered or omitted without departing from the scope of the present invention as defined in the appended claims. For example, alternate optical filters (e.g., non-transparent filters having absorptive, dichroic, etc. properties in addition to selective light blocking properties), may be substituted for optical filters 1004, 1102, and 1206. These and other deviations from the particular examples shown will be apparent to those skilled in the art, particularly in view of the foregoing disclosure.

## Claims

1. An image projector (200) comprising:
a light source (202) configured to provide an illumination beam (222, 224),
a controller (210) operative to receive image data (226) and to provide control signals based at least in part on said image data;
a reflective phase-modulating first spatial light modulator, SLM (220) configured to receive the illumination beam (224) and to selectively steer portions of said illumination beam to create a modulated illumination beam (214) responsive to signals from said controller (210), wherein the modulated illumination beam (214) includes light modulated by said first SLM (220) and unmodulated light reflected from said first SLM (220);
a second SLM (206); and
lightfield optics (204) operative to illuminate the second SLM (206) with a desired lightfield (216), the lightfield optics (204) comprising:
a first optical component (902, 1002, 1204) disposed in the path of said modulated illumination beam (214), the first optical component being a Fourier lens configured to produce a Fourier transform of the received modulated illumination beam (214) in a Fourier plane of said first optical component (902, 1002, 1204);
an optical filter (904, 1004, 1102, 1206) disposed at or near the Fourier plane of said first optical component and operative to selectively filter portions of the Fourier transform corresponding to said unmodulated light reflected from said first SLM (220) while preserving the DC component of said light modulated by said first SLM (220) so as to create a filtered, modulated illumination beam; and
a second optical component (906, 1008, 1212) configured to focus the filtered, modulated illumination beam on the second SLM (206) to illuminate the second SLM (206) with the desired lightfield (216),
wherein the second SLM (206) is configured to modulate the amplitude of the desired lightfield (216) to create an imaging beam (218) corresponding to said received image data.

2. The image projector (200) of Claim 1, wherein said optical filter (1004, 1206) includes an opaque region (1006, 1208) at a center of said filter (1004, 1206).

3. The image projector (200) of Claim 1 or Claim 2, wherein said optical filter (1004, 1206) includes an opaque region (1006, 1208) disposed on an optical axis of said first optical component (1002, 1204).

4. The image projector (200) of any one of Claims 1 to 3, wherein said filter (1102) includes a polarizing region (1104) at a center of said filter (1102).

5. The image projector (200) of Claim 4, wherein said optical filter (1102) is rotatable about an axis passing through said polarizing region (1104).

6. The image projector (200) of Claim 1, wherein:
said optical filter (1206) includes an opaque region (1210) displaced from an optical axis of said first optical component (1204), and said first SLM (1202) is operative to steer unwanted light toward said opaque region (1210).

7. The image projector (200) of Claim 6, wherein said optical filter (1206) includes a second opaque region (1208) disposed on said optical axis of said first optical component (1204).

8. The image projector (200) of Claim 1, wherein:
said optical filter (1004, 1206) includes an opaque region (1006, 1208) disposed to block said unmodulated light.

9. The image projector (200) of any one of Claims 1 to 8, wherein said optical filter (1004, 1206) is a transparent circular element with a light block (1006, 1208) at the center.

10. The image projector (200) of any one of Claims 1 to 9, wherein said optical filter (1004) is slidable with respect to the first and second optical components (1002, 1008).

11. A method of improving contrast in an projected image, said method including:
receiving image data;
selectively steering portions of an illumination beam (222, 224) by a reflective phase-modulating first spatial light modulator, SLM (220) based at least in part on said image data to generate a modulated illumination beam (214),
receiving the modulated illumination beam (214) from the first SLM (220) by a Fourier lens (902, 1002, 1204);
producing a Fourier transform of the received modulated illumination beam (214) in a Fourier plane of said Fourier lens (902, 1002, 1204);
selectively filtering portions of the Fourier transform corresponding to unmodulated light reflected from said first SLM (220) by means of an optical filter (904, 1004, 1102, 1206) disposed at or near the Fourier plane of said Fourier lens (902, 1002, 1204) while preserving the DC component of light modulated by said first SLM (220), so as to create a filtered, modulated illumination beam; and
focusing the filtered, modulated illumination beam on a second SLM (206) to illuminate the second SLM (206) with a desired lightfield (216),
the second SLM (206) spatially modulating the amplitude of the desired lightfield (216) to create an imaging beam (218) corresponding to said received image data.

## Patentansprüche

1. Bildprojektor (200), umfassend:
eine Lichtquelle (202), die konfiguriert ist, um einen Beleuchtungsstrahl (222, 224) zu erzeugen;
eine Steuerung (210), die dazu betreibbar ist, Bilddaten (226) zu empfangen und Steuersignale zumindest teilweise auf der Grundlage der Bilddaten bereitzustellen;
einen reflektierenden phasenmodulierenden ersten räumlichen Lichtmodulator, SLM, (220), der konfiguriert ist, den Beleuchtungsstrahl (224) zu empfangen und Abschnitte des Beleuchtungsstrahls selektiv zu lenken, um einen modulierten Beleuchtungsstrahl (214) als Reaktion auf Signale von der Steuereinheit (210) zu erzeugen, wobei der modulierte Beleuchtungsstrahl (214) Licht, das durch den ersten SLM (220) moduliert wurde, und unmoduliertes Licht, das von dem ersten SLM (220) reflektiert wird, einschließt;
einen zweiten SLM (206); und
Lichtfeldoptik (204), die dazu betreibbar ist, den zweiten SLM (206) mit einem gewünschten Lichtfeld (216) zu beleuchten, wobei die Lichtfeldoptik (204) Folgendes umfasst:
eine erste optische Komponente (902, 1002, 1204), die die im Pfad des modulierten Beleuchtungsstrahls (214) angeordnet ist, wobei die erste optische Komponente eine Fourier-Linse ist, die konfiguriert ist, um eine Fourier-Transformation des empfangenen modulierten Beleuchtungsstrahls (214) in einer Fourier-Ebene der ersten optischen Komponente (902, 1002, 1204) zu erzeugen;
einen optischen Filter (904, 1004, 1102, 1206), der an oder in der Nähe der Fourier-Ebene der ersten optischen Komponente angeordnet ist und dazu betreibbar ist, Abschnitte der Fourier-Transformation, die dem unmodulierten Licht entsprechen, das von dem ersten SLM (220) reflektiert wird, selektiv zu filtern, während die DC-Komponente des Lichts, das vom ersten SLM (220) moduliert wurde, beizubehalten, um einen gefilterten, modulierten Beleuchtungsstrahl zu erzeugen; und
eine zweite optische Komponente (906, 1008, 1212), die konfiguriert ist, um den gefilterten, modulierten Beleuchtungsstrahl auf den SLM (206) zu fokussieren, um den zweiten SLM (206) mit dem gewünschten Lichtfeld (216) zu beleuchten,
wobei der zweite SLM (206) konfiguriert ist, um die Amplitude des gewünschten Lichtfelds (216) zu modulieren, um einen Abbildungsstrahl (218) zu erzeugen, der den empfangenen Bilddaten entspricht.

2. Bildprojektor (200) nach Anspruch 1, wobei der optische Filter (1004, 1206) einen undurchsichtigen Bereich (1006, 1208) in der Mitte des Filters (1004, 1206) einschließt.

3. Bildprojektor (200) nach Anspruch 1 oder Anspruch 2, wobei der optische Filter (1004, 1206) einen undurchsichtigen Bereich (1006, 1208) einschließt, der auf einer optischen Achse der ersten optischen Komponente (1002, 1204) angeordnet ist.

4. Bildprojektor (200) nach einem der Ansprüche 1 bis 3, wobei der Filter (1102) einen polarisierenden Bereich (1104) in der Mitte des Filters (1102) einschließt.

5. Bildprojektor (200) nach Anspruch 4, wobei der optische Filter (1102) um eine Achse drehbar ist, die durch den polarisierenden Bereich (1104) verläuft.

6. Bildprojektor (200) nach Anspruch 1, wobei:
der optische Filter (1206) einen undurchsichtigen Bereich (1210) einschließt, der von einer optischen Achse der ersten optischen Komponente (1204) versetzt ist, und der erste SLM (1202) dazu betreibbar ist, unerwünschtes Licht in Richtung des undurchsichtigen Bereichs (1210) zu lenken.

7. Bildprojektor (200) nach Anspruch 6, wobei der optische Filter (1206) einen zweiten undurchsichtigen Bereich (1208) einschließt, der auf der optischen Achse der ersten optischen Komponente (1204) angeordnet ist.

8. Bildprojektor (200) nach Anspruch 1, wobei:
der optische Filter (1004, 1206) einen undurchsichtigen Bereich (1006, 1208) einschließt, der angeordnet ist, um das unmodulierte Licht zu blockieren.

9. Bildprojektor (200) nach einem der Ansprüche 1 bis 8, wobei der optische Filter (1004, 1206) ein transparentes kreisförmiges Element mit einem Lichtblock (1006, 1208) in der Mitte ist.

10. Bildprojektor (200) nach einem der Ansprüche 1 bis 9, wobei der optische Filter (1004) in Bezug auf die erste und die zweite optische Komponente (1002, 1008) verschiebbar ist.

11. Verfahren zur Verbesserung des Kontrastes in einem projizierten Bild, wobei das Verfahren einschließt:
Empfangen von Bilddaten;
selektives Lenken von Abschnitten eines Beleuchtungsstrahls (222, 224) durch einen reflektierenden phasenmodulierenden ersten räumlichen Lichtmodulator, SLM, (220) zumindest teilweise auf der Grundlage der Bilddaten, um einen modulierten Beleuchtungsstrahl (214) zu generieren,
Empfangen des modulierten Beleuchtungsstrahls (214) aus dem ersten SLM (220) durch eine Fourier-Linse (902, 1002, 1204);
Erzeugen einer Fourier-Transformation des empfangenen modulierten Beleuchtungsstrahls (214) in einer Fourier-Ebene der Fourier-Linse (902, 1002, 1204);
selektives Filtern von Abschnitten der Fourier-Transformation entsprechend unmoduliertem Licht, das vom ersten SLM (220) reflektiert wird, mittels eines optischen Filters (904, 1004, 1002, 1206), der an oder in der Nähe der Fourier-Ebene der Fourier-Linse (902, 1002, 1204) angeordnet ist, während die DC-Komponente von Licht, das vom ersten SLM (220) moduliert wurde, beibehalten wird, um einen gefilterten, modulierten Beleuchtungsstrahl zu erzeugen; und
Fokussieren des gefilterten, modulierten Beleuchtungsstrahls auf einen SLM (206), um den zweiten SLM (206) mit einem gewünschten Lichtfeld (216) zu beleuchten,
der zweite SLM (206) die Amplitude des gewünschten Lichtfelds (216) räumlich moduliert, um einen Abbildungsstrahl (218) zu erzeugen, der den empfangenen Bilddaten entspricht.

## Revendications

1. Projecteur d'image (200) comprenant :
une source de lumière (202) configurée pour fournir un faisceau d'éclairage (222, 224),
un dispositif de commande (210) opérationnel pour recevoir des données d'image (226) et pour fournir des signaux de commande sur la base au moins en partie desdites données d'image ;
un premier modulateur spatial de lumière, SLM, à modulation de phase réfléchissante (220) configuré pour recevoir le faisceau d'éclairage (224) et pour orienter sélectivement des portions dudit faisceau d'éclairage pour créer un faisceau d'éclairage modulé (214) en réponse à des signaux provenant dudit dispositif de commande (210), dans lequel le faisceau d'éclairage modulé (214) inclut une lumière modulée par ledit premier SLM (220) et une lumière non modulée réfléchie par ledit premier SLM (220) ;
un second SLM (206) :
une optique de champ lumineux (204) opérationnelle pour éclairer le second SLM (206) avec un champ lumineux souhaité (216), l'optique de champ lumineux (204) comprenant :
un premier composant optique (902, 1002, 1204) disposé sur le trajet dudit faisceau d'éclairage modulé (214), le premier composant optique étant une lentille de Fourier configurée pour produire une transformée de Fourier du faisceau d'éclairage modulé (214) reçu dans un plan de Fourier dudit premier composant optique (902, 1002, 1204) ;
un filtre optique (904, 1004, 1102, 1206) disposé au niveau ou à proximité du plan de Fourier dudit premier composant optique et opérationnel pour filtrer sélectivement des portions de la transformée de Fourier correspondant à ladite lumière non modulée réfléchie par ledit premier SLM (220) tout en préservant le composant CC de ladite lumière modulée par ledit premier SLM (220) afin de créer un faisceau d'éclairage modulé filtré ; et
un second composant optique (906, 1008, 1212) configuré pour focaliser le faisceau d'éclairage modulé filtré sur le second SLM (206) afin d'éclairer le second SLM (206) avec le champ lumineux souhaité (216),
dans lequel le second SLM (206) est configuré pour moduler l'amplitude du champ lumineux souhaité (216) afin de créer un faisceau d'imagerie (218) correspondant auxdites données d'image reçues.

2. Projecteur d'image (200) selon la revendication 1, dans lequel ledit filtre optique (1004, 1206) inclut une région opaque (1006, 1208) à un centre dudit filtre (1004, 1206).

3. Projecteur d'image (200) selon la revendication 1 ou 2, dans lequel ledit filtre optique (1004, 1206) inclut une région opaque (1006, 1208) disposée sur un axe optique dudit premier composant optique (1002, 1204).

4. Projecteur d'image (200) selon l'une quelconque des revendications 1 à 3, dans lequel ledit filtre (1102) inclut une région de polarisation (1104) à un centre dudit filtre (1102).

5. Projecteur d'image (200) selon la revendication 4, dans lequel ledit filtre optique (1102) est rotatif autour d'un axe passant à travers ladite région de polarisation (1104).

6. Projecteur d'image (200) selon la revendication 1, dans lequel :
ledit filtre optique (1206) inclut une région opaque (1210) déplacée à partir d'un axe optique dudit premier composant optique (1204), et ledit premier SLM (1202) est opérationnel pour diriger une lumière non désirée vers ladite région opaque (1210).

7. Projecteur d'image (200) selon la revendication 6, dans lequel ledit filtre optique (1206) inclut une seconde région opaque (1208) disposée sur ledit axe optique dudit premier composant optique (1204).

8. Projecteur d'image (200) selon la revendication 1, dans lequel :
ledit filtre optique (1004, 1206) inclut une région opaque (1006, 1208) disposée pour bloquer ladite lumière non modulée.

9. Projecteur d'image (200) selon l'une quelconque des revendications 1 à 8, dans lequel ledit filtre optique (1004, 1206) est un élément circulaire transparent avec un bloc lumineux (1006, 1208) au centre.

10. Projecteur d'image (200) selon l'une quelconque des revendications 1 à 9, dans lequel ledit filtre optique (1004) peut coulisser par rapport aux premier et second composants optiques (1002, 1008).

11. Procédé d'amélioration de contraste dans une image projetée, ledit procédé incluant :
la réception de données d'image ;
la direction sélective de portions d'un faisceau d'éclairage (222, 224) par un premier modulateur spatial de lumière, SLM, à modulation de phase réfléchissante (220) sur la base au moins en partie desdites données d'image pour générer un faisceau d'éclairage modulé (214),
la réception du faisceau d'éclairage modulé (214) du premier SLM (220) par une lentille de Fourier (902, 1002, 1204) ;
la production d'une transformée de Fourier du faisceau d'éclairage modulé (214) reçu dans un plan de Fourier de ladite lentille de Fourier (902, 1002, 1204) ;
le filtrage sélectif de portions de la transformée de Fourier correspondant à une lumière non modulée réfléchie par ledit premier SLM (220) au moyen d'un filtre optique (904, 1004, 1102, 1206) disposé au niveau ou à proximité du plan de Fourier de ladite lentille de Fourier (902, 1002, 1204) tout en préservant le composant CC de ladite lumière modulée par ledit premier SLM (220) afin de créer un faisceau d'éclairage modulé filtré ; et
la focalisation du faisceau d'éclairage modulé filtré sur un second SLM (206) afin d'éclairer le second SLM (206) avec un champ lumineux souhaité (216),
le second SLM (206) modulant spatialement l'amplitude du champ lumineux souhaité (216) afin de créer un faisceau d'imagerie (218) correspondant auxdites données d'image reçues.
